# EUROPEAN PATENT APPLICATION

(11) **EP 4 119 977 A1**
(43) Date of publication of application: **18.01.2023**
(21) Application number: 21205241.9
(22) Date of filing: 28.10.2021
(51) Int. Cl.: G01S 7/497, G01S 17/931

(54) **METHOD AND APPARATUS FOR CALIBRATING A VEHICLE-MOUNTED LIDAR, VEHICLE AND STORAGE MEDIUM**

(30) Priority: 12.07.2021 CN 202110785107
(71) Applicant: Guangzhou Xiaopeng Autopilot Technology Co., Ltd., Guangzhou, Guangdong 510000 (CN)
(72) Inventor: ZHOU, Jian, GUANGZHOU, 510000 (CN); CHEN, Hao, GUANGZHOU, 510000 (CN); ZHANG, Mingda, GUANGZHOU, 510000 (CN); DU, Yegui, GUANGZHOU, 510000 (CN)
(74) Representative: DREISS Patentanwälte PartG mbB

(57) **Abstract**

The disclosure provides a method for calibrating a vehicle-mounted LIDAR including: acquiring an original measurement value of a target center position in an original coordinate system measured by the LIDAR; acquiring a true value of the target center position in a vehicle coordinate system and a centering position value of a vehicle in the vehicle coordinate system; re-projecting the original measurement value in the vehicle coordinate system based on the centering position value to generate a re-projected position value; generating an initial angle value and a translation distance value based on the re-projected position value and the true value; and performing a calibration based on the initial angle value and the translation distance value. By introducing the centering position of the vehicle into the calibration process, the influence of the centering position error on the LIDAR calibration is eliminated while eliminating the angle information error and the depth information error of the LIDAR. A vehicle-mounted LIDAR is arranged in the front of a vehicle, and is arranged on each of the left side and the right side of the vehicle. After the vehicle is parked, scanning is performed with the light ray emitted by the left LIDAR. Scan data of the left target scanned by the left LIDAR is collected for one minute and integrated in time. This is repeated to calibrate the right LIDAR with the right target. After that, the vehicle LIDAR is calibrated.

## Description

### TECHNICAL FIELD

The present disclosure relates to the technical field of LIght Detection And Ranging (LIDAR), in particular to a method for calibrating a vehicle-mounted LIDAR, an apparatus for calibrating a vehicle-mounted LIDAR, a vehicle, and a storage medium.

### BACKGROUND

In the calibration process of a vehicle-mounted LIDAR, due to the assembly error of the LIDAR and the manufacturing error of the LIDAR mounting bracket, the calibration error of the LIDAR includes the angle error and the translation error of the LIDAR. In addition, when a vehicle enters a calibration position, due to certain deviation between the vehicle parking position and the preset calibration position, the error of the vehicle parking position also affects the calibration of the LIDAR. However, in related art, the calibration scheme of the LIDAR only corrects the angle error of the LIDAR, without correcting the translation error and the calibration position error, so that the detection data of the calibrated LIDAR still has errors. At present, there is no relevant scheme for correcting the translation error and the calibration position error of the LIDAR.

### SUMMARY

In view of the above problem, embodiments of the present disclosure have been proposed to provide a method for calibrating a vehicle-mounted LIDAR that overcomes or at least partially solves the above problem, a corresponding apparatus for calibrating a vehicle-mounted LIDAR, a vehicle and a storage medium.

In order to solve the problem, an embodiment of the disclosure discloses a method for calibrating a vehicle-mounted LIDAR. The method includes: acquiring an original measurement value of a target center position in an original coordinate system measured by the LIDAR; acquiring a true value of the target center position in a vehicle coordinate system and a centering position value of a vehicle in the vehicle coordinate system; re-projecting the original measurement value in the vehicle coordinate system based on the centering position value to generate a re-projected position value; generating an initial angle value and a translation distance value based on the re-projected position value and the true value; and performing a calibration based on the initial angle value and the translation distance value.

Optionally, the centering position value corresponds to a centering position matrix. Re-projecting the original measurement value in the vehicle coordinate system based on the centering position value to generate a re-projected position value includes: converting the original measurement value into a converted measurement value in the vehicle coordinate system through a preset conversion matrix; and pre-multiplying the converted measurement value by the centering position matrix to generate the re-projected position value.

Optionally, generating an initial angle value and a translation distance value based on the re-projected position value and the true value includes: determining a re-projected position vector corresponding to the re-projected position value and a true value vector corresponding to the true value; generating the initial angle value based on an angle between the re-projected position vector and the true value vector; and generating the translation distance value based on a modulus of the re-projected position vector and a modulus of the true value vector.

Optionally, generating an initial angle value based on an angle between the re-projected position vector and the true value vector includes: calculating a first angle corresponding to the re-projected position vector; calculating a second angle corresponding to the true value vector; and determining a difference between the first angle and the second angle as the initial angle value.

Optionally, generating a translation distance value based on a modulus of the re-projected position vector and a modulus of the true value vector includes: determining a difference between the modulus of the re-projected position vector and the modulus of the true value vector as the translation distance value.

Optionally, the method further includes: after generating the initial angle value and the translation distance value based on the re-projected position value and the true value, normalizing the re-projected position vector to make the translation distance value zero.

Optionally, performing a calibration based on the initial angle value and the translation distance value includes: calibrating an angle amount of the LIDAR by using the initial angle value; and calibrating a translation amount of the LIDAR by using the translation distance value.

An embodiment of the disclosure also discloses an apparatus for calibrating a vehicle-mounted LIDAR. The apparatus includes a first acquisition module, a second acquisition module, a re-projection module, a calibration value determination module and a calibration module. The first acquisition module is configured to acquire an original measurement value of a target center position in an original coordinate system measured by the LIDAR. The second acquisition module is configured to acquire a true value of the target center position in a vehicle coordinate system and a centering position value of a vehicle in the vehicle coordinate system. The re-projection module is configured to re-project the original measurement value in the vehicle coordinate system based on the centering position value to generate a re-projected position value. The calibration value determination module is configured to generate an initial angle value and a translation distance value based on the re-projected position value and the true value. The calibration module is configured to perform a calibration based on the initial angle value and the translation distance value.

An embodiment of the disclosure further discloses a vehicle, including: a processor, a memory and a computer program stored on the memory and executable on the processor. The computer program, when executed by the processor, implements steps of the method for calibrating a vehicle-mounted LIDAR described above.

An embodiment of the disclosure further discloses a computer-readable storage medium having stored thereon a computer program which, when executed by a processor, implements steps of the method for calibrating a vehicle-mounted LIDAR described above.

The embodiment of the disclosure includes the following advantages.

In the embodiment of the present disclosure, an original measurement value of a target center position in an original coordinate system measured by the LIDAR is acquired, a true value of the target center position in a vehicle coordinate system and a centering position value of a vehicle in the vehicle coordinate system are acquired, the original measurement value is re-projected in the vehicle coordinate system based on the centering position value to generate a re-projected position value, an initial angle value and a translation distance value are generated based on the re-projected position value and the true value, and a calibration is performed based on the initial angle value and the translation distance value. With the embodiment of the disclosure, the angle and the translation distance of the LIDAR can be calibrated, and by introducing the centering position of the vehicle into the calibration process, the influence of the centering position error on the LIDAR calibration is eliminated while eliminating the angle information error and the depth information error of the LIDAR

### BRIEF DESCRIPTION OF DRAWINGS

FIG. 1 is a flow chart illustrating steps of a method embodiment for calibrating vehicle-mounted LIDAR according to the present disclosure.
FIG. 2 is a flow chart illustrating steps of another method embodiment for calibrating vehicle-mounted LIDAR according to the present disclosure.
FIG. 3 is a schematic diagram illustrating calibration of a vehicle-mounted LIDAR according to the present disclosure.
FIG. 4 is a block diagram illustrating a structure of an apparatus embodiment for calibrating vehicle-mounted LIDAR according to the present disclosure.

### DESCRIPTION OF EMBODIMENTS

To further clarify the above objects, features and advantages of the present disclosure, a more particular description of the disclosure will be rendered by reference to the appended drawings and specific embodiments thereof.

In actual use, the error of depth information has little influence on the actual use according to the conventional thinking in the industry and in scenarios where the precision requirement is not high for the error of depth information. However, when the LIDAR is used in a vehicle which may be in a high-speed driving condition, the response time for the vehicle to respond to emergency braking is required to be short in case of emergency. Accordingly, if the depth information of the LIDAR is not calibrated, danger can be caused. Therefore, it is necessary to calibrate the depth information of the LIDAR in the vehicle.

In addition, in the calibration process of the LIDAR, a certain deviation exists between the centering position of the vehicle and a preset centering position. However, the error of the centering position is often ignored in the calibration process, so that certain errors exist in the calibration of the LIDAR

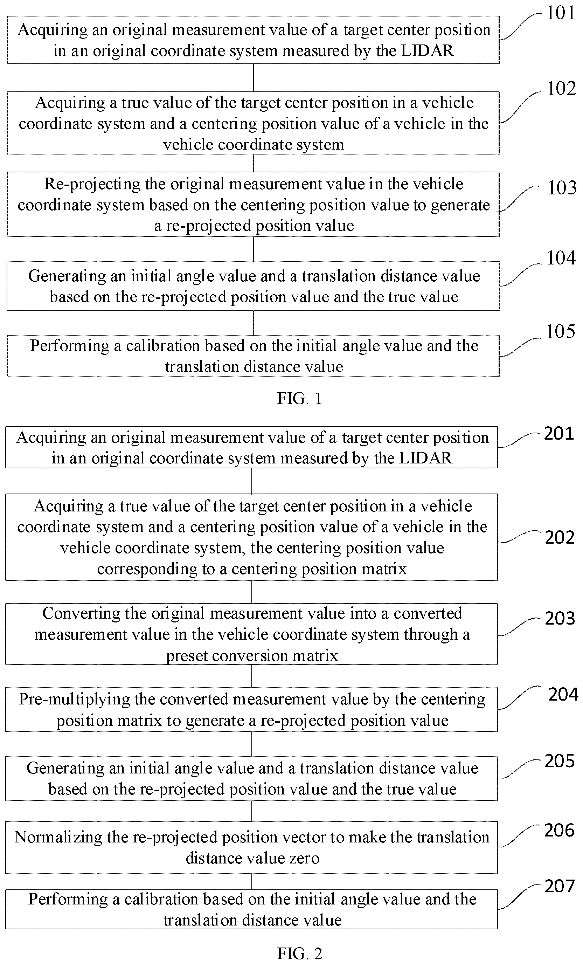

Referring to FIG. 1, a flow chart of steps of a method embodiment for calibrating vehicle-mounted LIDAR according to the present disclosure is shown. The method may include the following steps.

At Step 101, an original measurement value of a target center position in an original coordinate system measured by the LIDAR is acquired.

In the embodiment of the disclosure, the LIDAR can be a solid-state LIDAR. The LIDAR is installed in the front of the vehicle and is required to be installed at such a location that no obstacle exists ahead of the LIDAR, such as below a fog lamp of the vehicle. In addition, in order that the vehicle can detect front objects on the left and right sides of the vehicle, the LIDAR can be installed on both the left and right sides of the front of the vehicle.

In the process of calibration, an original measurement value of a target center position in an original coordinate system measured by the LIDAR needs to be acquired at first. The original coordinate system refers to a three-dimensional coordinate system adopted when the LIDAR scans the target and describes the center position of the target, such as a coordinate system established by taking a light ray emitting point of the LIDAR as a coordinate origin, a plumb line passing through the coordinate origin as a Z axis, horizontal lines passing through the coordinate origin and perpendicular to the plumb line as an X axis and a Y axis.

To be more specific, an original measurement value of a target center position in an original coordinate system measured by the LIDAR can be acquired by performing time integration on scan data of the target center scanned by the LIDAR to obtain preprocessed point cloud data, and performing the following processes on the preprocessed point cloud data.
(1) Reflectivity filtering: extracting high reflection points on the target, and removing data not on the target.
(2) Cluster extraction: extracting and distinguishing high reflection points of different target areas according to the target areas of the target.
(3) Voxelization grid filtration: filtering a large number of concentrated high reflection points, so that the high reflection points are uniformly distributed on the target area.
(4) Target plane fitting: after uniformly distributing the high reflection points, fitting the uniform high reflection points, and extracting a reference plane where the target is located.
(5) Repositioning all point cloud data: re-projecting the original point cloud to a target reference plane according to a light ray propagation route.
(6) Plane grid voxelization: voxelizing and filtering the re-projected point cloud to generate a uniform re-projected point cloud on the reference plane.
(7) Removing distance noise points: removing the random noise of re-projected point cloud outside the target area on the reference plane.
(8) Center point coordinate calculation: after uniformly distributing the re-projected point cloud through the steps of plane grid voxelization and removing distance noise points, and removing the random noise of re-projected point cloud, central point coordinate values are calculated based on the remaining re-projected point cloud as an actual measurement value of the target center, which is used as the original measurement value of the target center position. The center coordinate values may be calculated in three manners: calculating centroid coordinate values of the target, calculating circle-center-fitting center coordinate values, or calculating ellipse-center-fitting center coordinate values.

At Step 102, a true value of the target center position in a vehicle coordinate system and a centering position value of a vehicle in the vehicle coordinate system are acquired.

In the calibration process of the target, the target is placed at a position in advance, and the ideal centering position of the vehicle is also definite. Therefore, the position of the target center and the ideal centering position each have a unique corresponding coordinate value in the vehicle coordinate system. When calibration is performed, the coordinate value corresponding to the target center position is obtained as the true value in the vehicle coordinate system, and the coordinate value corresponding to the centering position is acquired as the centering position value in the vehicle coordinate system.

At Step 103, the original measurement value is re-projected in the vehicle coordinate system based on the centering position value to generate a re-projected position value.

The original measurement value in the original coordinate system is re-projected into the vehicle coordinate system according to a preset coordinate conversion method, and then rotation and/or translation of the centering position value are introduced to generate the re-projected position value. The vehicle coordinate system refers to a coordinate system which takes a vehicle as a reference to describe the position of an object, such as a coordinate system established by taking the center of the vehicle as a coordinate origin, the transverse direction of the vehicle as an X-axis direction, the longitudinal direction of the vehicle as a Y-axis direction and the height direction of the vehicle as a Z-axis direction.

At Step 104, an initial angle value and a translation distance value are generated based on the re-projected position value and the true value.

At the moment, the re-projected position value and the true value are both in the vehicle coordinate system. Direct operation can be performed between the two position values. An initial angle value and a translation distance value are generated according to the difference between the re-projected position value and the true value.

At Step 105, a calibration is performed based on the initial angle value and the translation distance value.

The angle and the depth of the LIDAR are calibrated according to the generated initial angle value and translation distance value.

In the embodiment of the present disclosure, an original measurement value of a target center position in an original coordinate system measured by the LIDAR is acquired, a true value of the target center position in a vehicle coordinate system and a centering position value of a vehicle in the vehicle coordinate system are acquired, the original measurement value is re-projected in the vehicle coordinate system based on the centering position value to generate a re-projected position value, an initial angle value and a translation distance value are generated based on the re-projected position value and the true value, and a calibration is performed based on the initial angle value and the translation distance value. With the embodiment of the disclosure, the angle and the translation distance of the LIDAR can be calibrated, and by introducing the centering position of the vehicle into the calibration process, the influence of the centering position error on the LIDAR calibration is eliminated while eliminating the angle information error and the depth information error of the LIDAR.

Referring to FIG. 2, a flow chart of steps of another method embodiment for calibrating vehicle-mounted LIDAR according to the present disclosure is shown. The method may include the following steps.

At Step 201, an original measurement value of a target center position in an original coordinate system measured by the LIDAR is acquired.

After a vehicle is parked, the vehicle-mounted LIDAR scans the target. Once the target is scanned, an original measurement value of a target center position is generated in an original coordinate system of the LIDAR and acquired.

At Step 202, a true value of the target center position in a vehicle coordinate system and a centering position value of a vehicle in the vehicle coordinate system are acquired. The centering position value corresponds to a centering position matrix.

A position value of the target center position in a vehicle coordinate system is acquired as a true value. And a centering position value of the vehicle in the vehicle coordinate system is acquired. The centering position value can be used as an amount to be optimized, which at the moment can be expressed by a corresponding centering position matrix.

At Step 203, the original measurement value is converted into a converted measurement value in the vehicle coordinate system through a preset conversion matrix.

After the original measurement value in the original coordinate system is obtained, the original measurement value in the original coordinate system is converted into a converted measurement value in the vehicle coordinate system through a preset re-projecting matrix in the vehicle coordinate system. The converted measurement value is a position value obtained by directly projecting the original measurement value into the vehicle coordinate system without considering the centering position deviation. The preset re-projecting matrix is generated according to the spatial position relation between the origins of the original coordinate system and the vehicle coordinate system.

At Step 204, the converted measurement value is pre-multiplied by the centering position matrix to generate the re-projected position value.

After the converted measurement value is obtained, a re-projected position value having the centering position deviation corrected is generated by pre-multiplying the converted measurement value by the centering position matrix. The space position point corresponding to the re-projected position value is obtained by rotating and/or moving the centering position value when the original measured target center point is re-projected into the vehicle coordinate system.

At Step 205, an initial angle value and a translation distance value are generated based on the re-projected position value and the true value.

An initial angle value and a translation distance value are generated based on a difference between the re-projected position value and the true value.

In a preferred embodiment of the disclosure, generating an initial angle value and a translation distance value based on the re-projected position value and the true value includes the following substeps.

At Substep S2051, a re-projected position vector corresponding to the re-projected position value and a true value vector corresponding to the true value are determined.

In the vehicle coordinate system, based on the coordinate information of the re-projected position value, a re-projected position vector is established by taking the origin as a starting point. Similarly, based on the coordinate information of the true value, a true value vector is established by taking the origin as the starting point.

At Substep S2052, the initial angle value is generated based on an angle between the re-projected position vector and the true value vector; and
The initial angle value is generated based on an angle relationship between the re-projected position vector and the true value vector.

In a preferred embodiment of the disclosure, generating an initial angle value based on an angle between the re-projected position vector and the true value vector includes the following substeps.

At Substep S20521, a first angle corresponding to the re-projected position vector is calculated.

Space angles formed between the re-projected position vector and the three coordinate axes are calculated as angles corresponding to the first angle. Degrees of the three space angles are calculated as degrees of the first angle.

At Substep S20522, a second angle corresponding to the true value vector is calculated.

Space angles formed between the true value vector and the three coordinate axes are calculated as angles corresponding to the second angle. Degrees of the three space angles are calculated as degrees of the second angle.

At Substep S20523, a difference between the first angle and the second angle as the initial angle value is determined.

After the first angle and the second angle are determined, the difference value between the first angle and the second angle is calculated based on degrees of the first angle and the second angle corresponding to the same coordinate axis. It needs to be explained that since the first angle and the second angle are space angles, the difference value between the first angle and the second angle is directional. The difference value is taken as an initial angle value.

At Substep S2053, the translation distance value is generated based on a modulus of the re-projected position vector and a modulus of the true value vector.

The translation distance value is generated based on the relationship between a modulus of the re-projected position vector and a modulus of the true value vector.

In a preferred embodiment of the disclosure, generating a translation distance value based on a modulus of the re-projected position vector and a modulus of the true value vector includes the following substep.

At Substep S20531, a difference between the modulus of the re-projected position vector and the modulus of the true value vector is determined as the translation distance value.

Note that a vector has three elements: starting point, direction and length. The modulus of the vector is the length of the vector. Hence, the difference between the modulus of the re-projected position vector and the modulus of the true value vector can be determined as the translation distance value. Since the modulus is scalar and has no direction, the difference between the modulus of the re-projected position vector and the modulus of the true value vector is also scalar.

At Step 206, the re-projected position vector is normalized to make the translation distance value zero.

NTV (normalized transformation vector) algorithm is adopted to normalize the re-projected vector, so that the translation distance value is zero, and the depth error of the radar is eliminated. Specifically, the NTV algorithm normalizes the re-projected position vector by multiplying the re-projected position vector by a reciprocal value of the modulus of the re-projected position vector to obtain a unit vector.

At Step 207, a calibration is performed based on the initial angle value and the translation distance value.

The angle and the depth of the LIDAR are calibrated according to the generated initial angle value and translation distance value.

In a preferred embodiment of the disclosure, performing a calibration based on the initial angle value and the translation distance value includes the following substeps.

At Substep S2071, an angle amount of the LIDAR is calibrated by using the initial angle value.

At Substep S2072, a translation amount of the LIDAR is calibrated by using the translation distance value.

After obtaining the initial angle value and the translation distance value, an angle amount of the LIDAR is calibrated by using the initial angle value, and a translation amount of the LIDAR is calibrated by using the translation distance value.

In the embodiment of the present disclosure, an original measurement value of a target center position in an original coordinate system measured by the LIDAR is acquired, a true value of the target center position in the vehicle coordinate system and a centering position value of a vehicle in the vehicle coordinate system are acquired, the original measurement value is re-projected in the vehicle coordinate system based on the centering position value to generate a re-projected position value, an initial angle value and a translation distance value are generated based on the re-projected position value and the true value, and a calibration is performed based on the initial angle value and the translation distance value. With the embodiment of the disclosure, the angle and the translation distance of the LIDAR can be calibrated, and by introducing the centering position of the vehicle into the calibration process, the influence of the centering position error on the LIDAR calibration is eliminated while eliminating the angle information error and the depth information error of the LIDAR Furthermore, by normalizing the re-projected position vector, the error of re-projection is further reduced, the error of depth information can be better eliminated, and the LIDAR is better calibrated.

To enable those skilled in the art to better understand the embodiments of the present application, the embodiments of the present application are described below by way of an example.

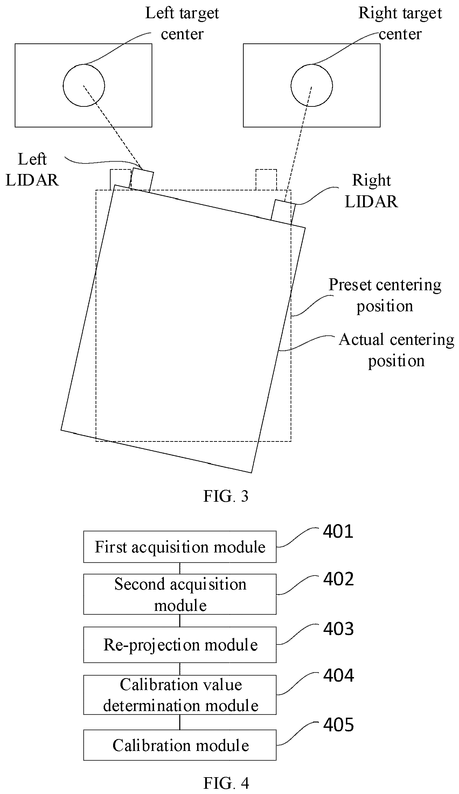

Referring now to FIG. 3, a schematic diagram of calibration of a vehicle-mounted LIDAR according to the present disclosure is shown.

A vehicle-mounted LIDAR is arranged in the front of a vehicle, and is arranged on each of the left side and the right side of the vehicle. After the vehicle is parked, scanning is performed with the light ray emitted by the left LIDAR. Scan data of the left target scanned by the left LIDAR is collected for one minute and integrated in time, and then subject to the steps of reflectivity filtering, cluster extraction, voxelization grid filtration, target plane fitting, repositioning all point cloud data, plane grid voxelization, removing distance noise and average point coordinate calculation, so that the original measurement value of the target center position measured by the left LIDAR is acquired in a coordinate system with the point where the light ray is emitted from the left LIDAR taken as a coordinate origin, a plumb line passing through the coordinate origin taken as a Z axis and horizontal lines passing through the coordinate origin and perpendicular to the plumb line taken as an X axis and a Y axis. Then, the original measurement value is projected into the vehicle coordinate system through a re-projecting matrix determined according to the spatial difference between the vehicle coordinate system and the original coordinate system, to generate a converted measurement value. Next, a re-projected position value having the centering position deviation corrected is generated by pre-multiplying the converted measurement value by the centering position matrix. Subsequently, a true value of the center position of the left target in the vehicle coordinate system is obtained, and a re-projected position vector corresponding to the re-projected position value and a true value vector corresponding to the true value are established. Degrees of a space angle formed between the re-projected position vector and the horizontal plane is calculated as degrees of a first angle, degrees of a space angle formed between the true value vector and the horizontal plane is calculated as degrees of a second angle, and an initial angle value is determined according to the difference between the degrees of the first angle and the second angle. Then the modulus of the re-projected position vector and the modulus of the true value vector are calculated, and the difference value between the modulus of the re-projected position vector and the modulus of the true value vector is taken as a translation distance value. Further, the re-projected position vector can be converted into a unit vector so that the translation distance value is zero. Finally the angle information of the left LIDAR is calibrated according to the initial angle value, and the depth information of the left LIDAR is calibrated according to the translation distance value. The above steps are then repeated to calibrate the right LIDAR with the right target. After that, the vehicle LIDAR is calibrated.

In the embodiment of the disclosure, the influence of the centering position deviation on radar calibration is eliminated by correcting the centering position of the vehicle during re-projection. Then, by processing the target detection value detected by the LIDAR and the true value of the target, the depth information of the LIDAR is calibrated simultaneously in the process of calibrating the angle amount during the calibration process of the LIDAR, so that the calibration error of the LIDAR is reduced, and the detection information of the LIDAR is more accurate.

It should be noted that, for purposes of simplicity of description, method embodiments are described as a series of combinations of acts, but those skilled in the art will recognize that the embodiments of the disclosure are not limited by the order of acts described, as some steps may occur in other orders or concurrently depending on the embodiments of the disclosure. Furthermore, those skilled in the art should also appreciate that the embodiments described in the specification are preferred embodiments and that the acts involved are not necessarily essential to embodiments of the disclosure.

Referring to FIG. 4, a block diagram of a structure of an apparatus embodiment for calibrating vehicle-mounted LIDAR according to the present disclosure is shown. The apparatus may include a first acquisition module 401, a second acquisition module 402, a re-projection module 403, a calibration value determination module 404 and a calibration module 405.

The first acquisition module 401 is configured to acquire an original measurement value of a target center position in an original coordinate system measured by the LIDAR.

The second acquisition module 402 is configured to acquire a true value of the target center position in a vehicle coordinate system and a centering position value of a vehicle in the vehicle coordinate system.

The re-projection module 403 is configured to re-project the original measurement value in the vehicle coordinate system based on the centering position value to generate a re-projected position value.

The calibration value determination module 404 is configured to generate an initial angle value and a translation distance value based on the re-projected position value and the true value.

The calibration module 405 is configured to perform a calibration based on the initial angle value and the translation distance value.

In a preferred embodiment of the disclosure, the centering position value corresponds to a centering position matrix. The re-projection module 403 includes a conversion sub-module and a pre-multiplying sub-module.

The conversion sub-module is configured to convert the original measurement value into a converted measurement value in the vehicle coordinate system through a preset conversion matrix.

The pre-multiplying sub-module is configured to pre-multiply the converted measurement value by the centering position matrix to generate the re-projected position value.

In a preferred embodiment of the disclosure, the calibration value determination module 404 includes a vector conversion sub-module, an initial angle value determination sub-module and a translation distance value determination sub-module.

The vector conversion sub-module is configured to determine a re-projected position vector corresponding to the re-projected position value and a true value vector corresponding to the true value.

The initial angle value determination sub-module is configured to generate the initial angle value based on an angle between the re-projected position vector and the true value vector.

The translation distance value determination sub-module is configured to generate the translation distance value based on a modulus of the re-projected position vector and a modulus of the true value vector.

In a preferred embodiment of the disclosure, the initial angle value determination sub-module includes a first calculating unit, a second calculating unit and an initial angle value determination unit.

The first calculating unit is configured to calculate a first angle corresponding to the re-projected position vector.

The second calculating unit is configured to calculate a second angle corresponding to the true value vector.

The initial angle value determination unit is configured to determine a difference between the first angle and the second angle as the initial angle value.

In a preferred embodiment of the disclosure, the translation distance value determination sub-module includes a translation distance value determination unit.

The translation distance value determination unit is configured to determine a difference between the modulus of the re-projected position vector and the modulus of the true value vector as the translation distance value.

In a preferred embodiment of the disclosure, the apparatus further includes a normalizing unit.

The normalizing unit is configured to normalize the re-projected position vector to make the translation distance value zero.

In a preferred embodiment of the disclosure, the calibration module 405 includes an angle calibrating sub-module and a depth calibrating sub-module.

The angle calibrating sub-module is configured to calibrate an angle amount of the LIDAR by using the initial angle value.

The depth calibrating sub-module is configured to calibrate a translation amount of the LIDAR by using the translation distance value.

For the apparatus embodiment, which is substantially similar to the method embodiment, the description is relatively simple. For related information, reference can be made to part of the description of the method embodiment.

An embodiment of the present application further provides a vehicle, including: a processor, a memory and a computer program stored on the memory and executable on the processor. The computer program, when executed by the processor, implements processes of the method embodiments for calibrating a vehicle-mounted LIDAR described above, and achieves the same technical effect. To avoid repetition, details thereof will not be described redundantly here.

An embodiment of the present application further provides a computer-readable storage medium having stored thereon a computer program. The computer program, when executed by a processor, implements processes of the method embodiments for calibrating a vehicle-mounted LIDAR described above, and achieves the same technical effect. To avoid repetition, details thereof will not be described redundantly here.

The embodiments in this specification are described in an incremental manner, with each embodiment being described with emphasis on differences from the other embodiments. For the same or similar parts of the embodiments, reference can be made to each other.

Those skilled in the art will appreciate that embodiments of the present disclosure may be provided as a method, apparatus, or computer program product. Thus, embodiments of the present disclosure may take the form of an entirely hardware embodiment, an entirely software embodiment, or an embodiment combining software and hardware aspects. Moreover, embodiments of the present disclosure may take the form of a computer program product implemented on one or more computer-usable storage media (including, but not limited to, magnetic disk storage, CD-ROM, optical storage, and the like) having computer-usable program code embodied therein.

Embodiments of the present disclosure are described with reference to flowcharts and/or block diagrams of methods, terminal devices (systems), and computer program products according to embodiments of the present disclosure. It is to be understood that each flow and/or block of the flowcharts and/or block diagrams, and combinations of flows and/or blocks in the flowcharts and/or block diagrams, can be implemented by computer program instructions. These computer program instructions may be provided to a processor of a general purpose computer, special purpose computer, embedded processing machine, or other programmable data processing terminal device to produce a machine, such that the instructions, which execute via the processor of the computer or other programmable data processing terminal device, produce device for implementing the functions specified in one or more flows of the flowcharts and/or one or more blocks of the block diagrams.

These computer program instructions may also be stored in a computer-readable memory that can direct a computer or other programmable data processing terminal device to function in a particular manner, such that the instructions stored in the computer-readable memory produce an article of manufacture including instruction device which implements the functions specified in one or more flows of the flowcharts and/or one or more blocks of the block diagrams.

These computer program instructions may also be loaded onto a computer or other programmable data processing terminal device to cause a series of operational steps to be performed on the computer or other programmable apparatus to produce a computer implemented process, such that the instructions which execute on the computer or other programmable apparatus provide steps for implementing the functions specified in one or more flows of the flowcharts and/or one or more blocks of the block diagrams.

Although the preferred embodiments of the present disclosure have been described, additional changes and modifications may be made to these embodiments by those skilled in the art once the basic inventive concept is known. Therefore, it is intended that the appended claims be interpreted as including the preferred embodiments and all changes and modifications that fall within the scope of the embodiments of the present disclosure.

Finally, it should also be noted that relational terms such as first and second, and the like are used herein solely to distinguish one entity or operation from another entity or operation without necessarily requiring or implying any such actual relationship or order between such entities or operations. Moreover, the terms "includes/comprises", "including/comprising", or any other variation thereof, are intended to cover a non-exclusive inclusion, such that a process, method, article, or terminal device that includes a list of elements does not include only those elements but may include other elements not expressly listed or inherent to such process, method, article, or terminal device. An element defined by the phrase "include a/an" does not, without more constraints, preclude the existence of additional identical elements in the process, method, article, or terminal device that includes the element.

In the foregoing, the method and apparatus for calibrating vehicle-mounted LIDAR, the vehicle and the storage medium provided by the disclosure have been described in detail. The principles and embodiments of the present disclosure have been described herein with specific examples, which are presented to aid in the understanding of the methods and core concepts of the present disclosure. At the same time, variations will occur to those skilled in the art in light of the teachings of the present disclosure, both in terms of its specific embodiments and its scope of application. In light of the above teachings, this description should not be construed as limiting the disclosure.

## Claims

1. A method for calibrating a vehicle-mounted LIght Detection And Ranging (LIDAR), comprising:
acquiring an original measurement value of a target center position in an original coordinate system measured by the LIDAR;
acquiring a true value of the target center position in a vehicle coordinate system and a centering position value of a vehicle in the vehicle coordinate system;
re-projecting the original measurement value in the vehicle coordinate system based on the centering position value to generate a re-projected position value;
generating an initial angle value and a translation distance value based on the re-projected position value and the true value; and
performing a calibration based on the initial angle value and the translation distance value.

2. The method of claim 1, wherein the centering position value corresponds to a centering position matrix, and said re-projecting the original measurement value in the vehicle coordinate system based on the centering position value to generate a re-projected position value comprises:
converting the original measurement value into a converted measurement value in the vehicle coordinate system through a preset conversion matrix; and
pre-multiplying the converted measurement value by the centering position matrix to generate the re-projected position value.

3. The method of claim 1, wherein said generating an initial angle value and a translation distance value based on the re-projected position value and the true value comprises:
determining a re-projected position vector corresponding to the re-projected position value and a true value vector corresponding to the true value;
generating the initial angle value based on an angle between the re-projected position vector and the true value vector; and
generating the translation distance value based on a modulus of the re-projected position vector and a modulus of the true value vector.

4. The method of claim 3, wherein said generating an initial angle value based on an angle between the re-projected position vector and the true value vector comprises:
calculating a first angle corresponding to the re-projected position vector;
calculating a second angle corresponding to the true value vector; and
determining a difference between the first angle and the second angle as the initial angle value.

5. The method of claim 3, wherein said generating a translation distance value based on a modulus of the re-projected position vector and a modulus of the true value vector comprises:
determining a difference between the modulus of the re-projected position vector and the modulus of the true value vector as the translation distance value.

6. The method of claim 3, further comprising: after generating the initial angle value and the translation distance value based on the re-projected position value and the true value,
normalizing the re-projected position vector to make the translation distance value zero.

7. The method of claim 1, wherein said performing a calibration based on the initial angle value and the translation distance value comprises:
calibrating an angle amount of the LIDAR by using the initial angle value; and
calibrating a translation amount of the LIDAR by using the translation distance value.

8. An apparatus for calibrating a vehicle-mounted LIDAR, comprising:
a first acquisition module configured to acquire an original measurement value of a target center position in an original coordinate system measured by the LIDAR;
a second acquisition module configured to acquire a true value of the target center position in a vehicle coordinate system and a centering position value of a vehicle in the vehicle coordinate system;
a re-projection module configured to re-project the original measurement value in the vehicle coordinate system based on the centering position value to generate a re-projected position value;
a calibration value determination module configured to generate an initial angle value and a translation distance value based on the re-projected position value and the true value; and
a calibration module configured to perform a calibration based on the initial angle value and the translation distance value.

9. The apparatus of claim 8, wherein the centering position value corresponds to a centering position matrix, and said re-projection module comprises:
a conversion sub-module configured to convert the original measurement value into a converted measurement value in the vehicle coordinate system through a preset conversion matrix; and
a pre-multiplying sub-module configured to pre-multiply the converted measurement value by the centering position matrix to generate the re-projected position value.

10. The apparatus of claim 8, wherein said calibration value determination module comprises:
a vector conversion sub-module configured to determine a re-projected position vector corresponding to the re-projected position value and a true value vector corresponding to the true value;
an initial angle value determination sub-module configured to generate the initial angle value based on an angle between the re-projected position vector and the true value vector; and
a translation distance value determination sub-module configured to generate the translation distance value based on a modulus of the re-projected position vector and a modulus of the true value vector.

11. The apparatus of claim 10, wherein said initial angle value determination sub-module comprises:
a first calculating unit configured to calculate a first angle corresponding to the re-projected position vector;
a second calculating unit configured to calculate a second angle corresponding to the true value vector; and
an initial angle value determination unit configured to determine a difference between the first angle and the second angle as the initial angle value.

12. The apparatus of claim 10, wherein said translation distance value determination sub-module comprises:
a translation distance value determination unit configured to determine a difference between the modulus of the re-projected position vector and the modulus of the true value vector as the translation distance value.

13. The apparatus of claim 10, further comprising: a normalizing unit configured to, after generating the initial angle value and the translation distance value based on the re-projected position value and the true value, normalize the re-projected position vector to make the translation distance value zero.

14. A vehicle comprising: a processor, a memory and a computer program stored on the memory and executable on the processor, the computer program, when executed by the processor, implementing steps of the method for calibrating a vehicle-mounted LIDAR of any one of claims 1 to 7.

15. A computer-readable storage medium having stored thereon a computer program which, when executed by a processor, implements steps of the method for calibrating a vehicle-mounted LIDAR of any one of claims 1 to 7.
